# EUROPEAN PATENT APPLICATION

(11) **EP 1 130 499 A2**
(43) Date of publication of application: **05.09.2001**
(21) Application number: 01300063.3
(22) Date of filing: 05.01.2001
(51) Int. Cl.: G06F 1/00

(54) **System and method for verifying safety of software**

(30) Priority: 07.01.2000 JP 2000001354
(71) Applicant: NEC CORPORATION, Tokyo (JP)
(72) Inventor: Takagi, Junji, Minato-ku, Tokyo (JP)
(74) Representative: Moir, Michael Christopher

(57) **Abstract**

A system is provided for verifying the safety of a program down-loaded to a device only once, the safety of the software thereafter being thereby ensured. The system includes a safe storage (212) for storing only a program for which safety has been ensured by a safety verifier (211), and for ensuring that the program cannot be stored by another means or rewritten. An executer (213) reads the program from the safe storage (212) for execution.

## Description

### BACKGROUND OF THE INVENTION

### 1. Field of the Invention:

The present invention relates to a system and a method for verifying and ensuring safety of software, and more particularly to a system and a method for ensuring safety of software by a single verification of the safety of the software.

### 2. Description the Related Art:

When a program is downloaded for execution to a device through a communication path including a wire or wireless network, it is necessary to make sure that the software is 'safe', i.e. that the program does not pose a risk for the device or a user of the device. The risk referred to herein specifically means execution of instructions which are essentially not permitted for the program, occurrence of errors or exceptions resulting from the execution of the program, unauthorized access to information in the device for which access is essentially not permitted, influence on execution of another program in the device, and similar matters.

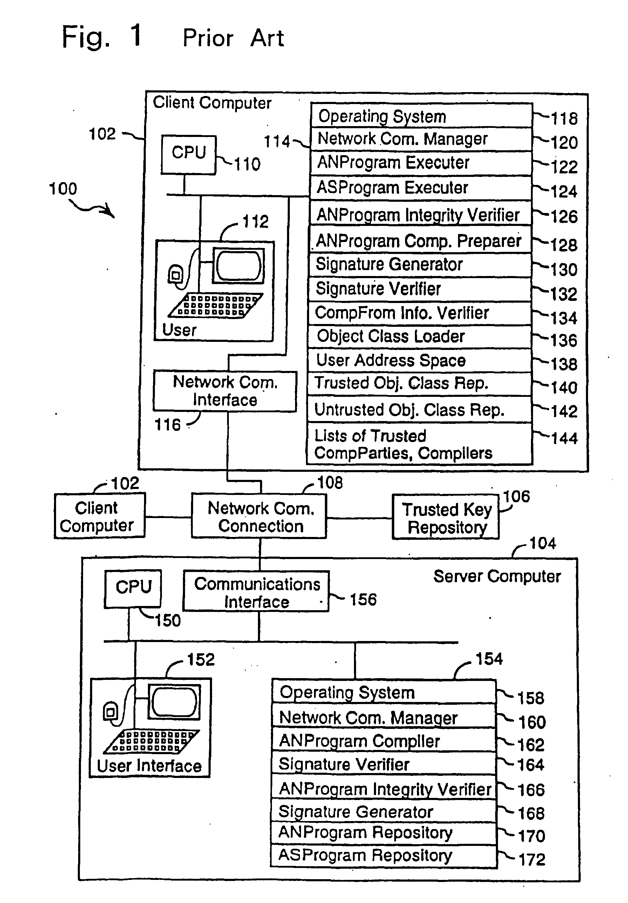

An example of methods of verifying safety of software in the prior art is described in Japanese Patent Laid-open Publication No. 10-11281. As shown in Fig. 1, the prior art method of verifying safety of software is performed in a system mainly comprising Network Communication Manager 120, Architecture Neutral Program Executer 122, Architecture Neutral Program Integrity Verifier 126, Trusted Object Class Repository 140, and Untrusted Object Class Repository 142.

The prior art method of verifying safety of software performed with the system of such a configuration operates as follows.

Specifically, an Architecture Neutral Program downloaded using Network Communication Manager 120 is stored by Untrusted Object Class Repository 142. Each time Architecture Neutral Program Executer 122 is to load an object class stored by Untrusted Object Class Repository 142, it verifies its safety using Architecture Neutral Program Integrity Verifier 126, and only if all verifications are passed, it loads the object class.

Small devices such as PDAs or cellular phones have problems such as those below in performing the aforementioned verification of safety, since severe limitations are imposed on the performance and memory capacity.

A first problem is the long amount of time taken for verifying safety. This is because PDAs or cellular phones do not have a high ability to execute software, while verification of safety of software requires tracking and examination of a state in which the software is executed, and thus the verification takes a time equal to or longer than the time taken for the execution of the software.

A second problem is a long time taken for the start-up of software. This is because software can be started up only after its safety is verified since verification of safety is performed each time the software is executed, and such verification takes a long time.

A third problem is high power consumption. This is because verification of safety is complicated processing.

A fourth problem is the large memory capacity required for a device. This is because the memory capacity required is the sum of that required for executing software and that required for verifying the safety of the software.

### SUMMARY OF THE INVENTION

It is an object of the preferred embodiments of the present invention to provide a method of verifying and ensuring safety of software which requires only a single verification of software safety.

It is another object of the preferred embodiments of the present invention to provide a method of verifying and ensuring safety of software which can reduce time taken for verification of software and can ensure safety.

It is a further object of the preferred embodiments of the present invention to provide a method of verifying and ensuring safety of software which can reduce memory capacity required for verification of software.

A method of verifying and ensuring safety of software according to a first aspect of the present invention is performed in a system comprising a safety verifier and a safe storage, and operates to store in the safe storage and to execute only a program for which safety is ensured by the safety verifier.

A method of verifying and ensuring safety of software according to a second aspect of the present invention is performed in a system comprising a safe storage and a safety verifier, and operates such that, the safe storage stores whether each program has been verified and the result of the verification of a program if it has been verified, and if a program has not been verified at the execution, the program is first verified, and then executed only if the safety thereof is ensured.

### BRIEF DESCRIPTION OF THE DRAWINGS

Preferred features of the present invention will now be described, by way of example only, with reference to the accompanying drawings, in which:-
Fig. 1 is a block diagram showing a configuration of a system for a prior art method of verifying safety of software;
Fig. 2 is a block diagram showing a schematic configuration of a system in an embodiment of a prior art method of verifying safety of software;
Fig. 3 is a block diagram showing a schematic configuration of a system for a method of verifying and ensuring safety of software in a first embodiment of the present invention;
Fig. 4 is a flow chart showing the operations of the method of verifying and ensuring safety of software in the first embodiment of the present invention;
Fig. 5 is a block diagram showing a schematic configuration of a system for a method of verifying and ensuring safety of software in a second embodiment of the present invention; and
Fig. 6 is a flow chart showing the operations of the method of verifying and ensuring safety of software in the second embodiment of the present invention.

### DETAILED DESCRIPTION OF THE PREFERRED EMBODIMENTS

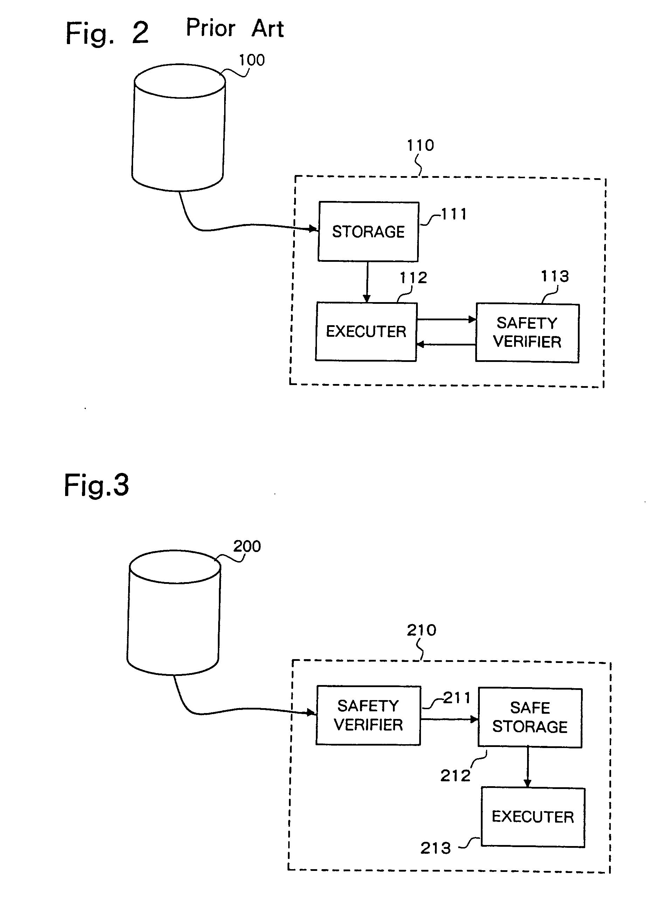

Next, preferred embodiments of the present invention are described in detail with reference to the drawings. Referring to Fig. 3, there is shown a system for verifying and ensuring safety of software in a first embodiment of the present invention which comprises downloadable program 200 and program executer 210. program executer 210 comprises safety verifier 211, safe storage 212, and executer 213.

Downloadable program 200 is downloaded for execution to program executer 210 through a communication path including a wire or wireless network.

Safety verifier 211 verifies the safety of the program and makes sure that no risk is posed for program executer 210 or a user of program executer 210.

The program for which safety is ensured is stored in safe storage 212. In the system for verifying and ensuring safety of software of the present invention, only the program for which safety is ensured by safety verifier 211 is stored in safe storage 212, ensuring that a program cannot otherwise be newly stored or a stored program cannot be rewritten.

Executer 213 reads program 200 from safe storage 212 for execution.

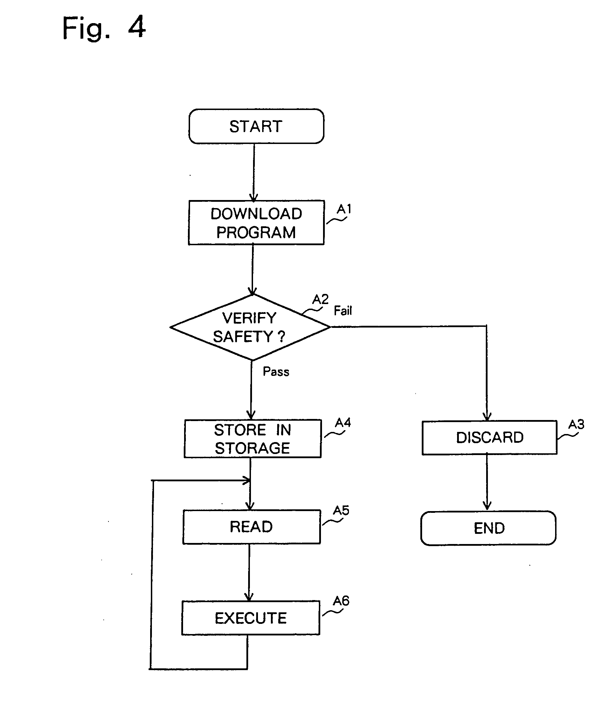

Next, description is made of the entire operation of a method of verifying and ensuring safety of software in the first embodiment of the present invention, with reference to a block diagram in Fig. 3 and a flow chart in Fig. 4.

First, downloadable program 200 is downloaded to program executer 210 through a communication path including a wire or wireless network (step A1 in Fig. 4).

Next, safety verifier 211 verifies the safety of program 200 (step A2 in Fig. 4). In the verification of the safety, checks are made to determine whether the program is tampered with, whether the program makes access beyond the area which is essentially permitted therefor, whether program executor 210 can allocate memory required for executing the program, and similar matters.

Specifically, the verification of safety is performed by checking each executable instruction for all possible combinations of processing paths (if branches or exception processing are present in turn from the beginning of the program). For example, for a load instruction, a check is made to determine whether an address from which the load is made is an unauthorized address. For a storage instruction, checks are made to determine whether an address to which storage is made is an unauthorized address and whether types match when loading and addressing are performed. For a jump instruction, checks are made to determine whether a destination of the jump exists, or whether the jump is being made to a location which is not included in the program. For an object-oriented program, checks are also made for definition of a class and to determine whether access to a member is correctly made. The individual checks are performed using known methods.

If safety verifier 211 determines that program 200 is not safe in one or more of the checks, program 200 is discarded and the processing is terminated (step A3 in Fig. 4).

If safety verifier 211 determines that program 200 is safe in all of the checks, program 200 is stored in safe storage 212 (step A4 in Fig. 4).

Safety verifier 211 ensures that program 200 is safe and that it is not rewritten by safe storage 212 thereafter. Thus, executer 213 read program 200 from safe storage 212 (step A5 in Fig. 4), and executes it as it is (step A6 in Fig. 4).

In this embodiment, only a program for which safety has been ensured is stored in the storage which has a function for ensuring'safety. Therefore, it is not necessary to verify safety each time the program stored in the storage with the safety-ensuring function is executed, and safety can be ensured by verification thereof only once.

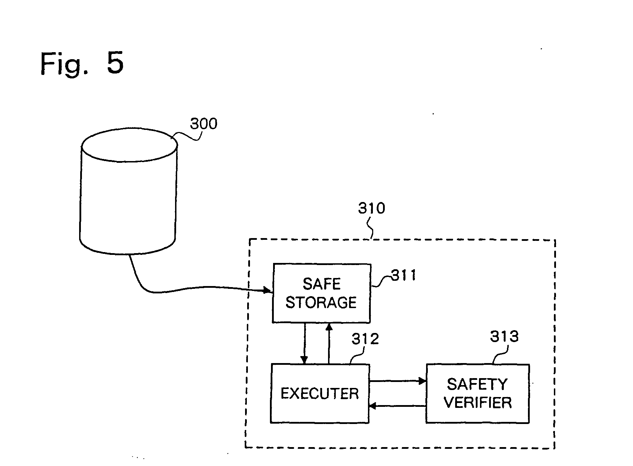

Next, description is made for a system for verifying and ensuring safety of software in a second embodiment of the present invention, with reference to the drawings. Referring to Fig. 5, there is shown the system in the second embodiment of the present invention which comprises downloadable program 300 and program executer 310. Program executer 310 comprises safe storage 311, executer 312, and safety verifier 313.

Downloadable program 300 is downloaded for execution to program executer 310 through a communication path including a wire or wireless network.

Safe storage 311 stores the downloaded program as one for which safety has not been verified. Only when the program downloaded in safe storage 311 and stored as one for which safety has not been verified is read and its safety is ensured by executer 312 and safety verifier 313, is the program stored in safe storage 311 as one for which safety has been verified. Thus, safe storage 311 stores programs marked as ones for which safety has not been verified, programs marked as ones for which safety has been verified, and programs marked as ones which are not safe. The programs marked as ones which are not safe may be discarded. The system for verifying and ensuring safety of software in the second embodiment ensures that without such verification a program cannot be newly stored in safe storage 311 and that a program there cannot be rewritten.

Executer 312 reads program 300 from safe storage 311, and stops execution thereof when read program 300 is marked as one which is not safe, or verifies the safety of program 300 using safety verifier 313 when the safety has not been verified. Only if the safety has been ensured, does it store program 300 in safe storage 311 as one which has been verified, and executes that program 300. When the read program is a program for which the safety has been verified, it executes the program as it is.

Safety verifier 313 verifies the safety of a program to make sure that no risk is posed for program executer 310 or a user of program executer 310.

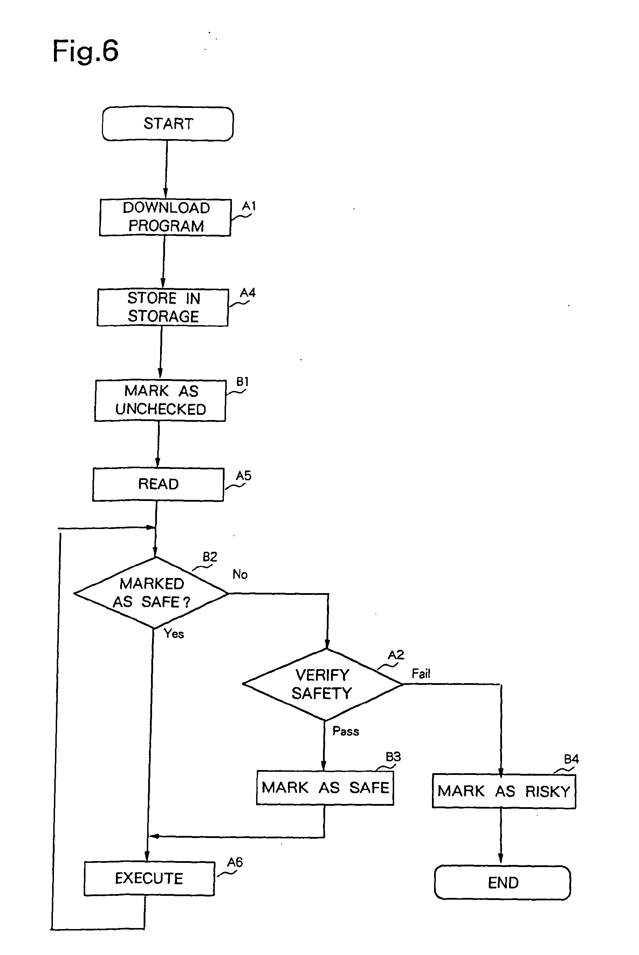

Next, description is made for the entire operation of a method of verifying and ensuring safety of software in the second embodiment of the present invention with reference to a block diagram in Fig. 5 and a flow chart in Fig. 6.

First, downloadable program 300 is downloaded to program executer 310 through a communication path including a wire or wireless network (step A1 in Fig. 6), stored in safe storage 311 (step A4 in Fig. 6), and marked as one for which safety has not been verified (step B1 in Fig. 6). Specifically, program executer 310 includes, for example, a table for recording the downloaded program and whether the safety of the program has been verified, and writes a value which indicates that the safety has not been verified into the associated field in the table.

Executor 312 reads program 300 from safe storage 311 (step A5 in Fig. 6), and checks whether its safety has been verified (step B2 in Fig. 6).

If the safety has been verified, executer 312 executes program 300 as it is (step A6 in Fig. 6).

If the safety has not been verified, safety verifier 313 verifies the safety of program 300 (step A2 in Fig. 6). In the verification of the safety, checks are made to determine whether the program has been tampered with, whether the program makes access beyond the area which is essentially permitted therefor, whether program executer 310 can allocate memory required for executing the program, and similar matters. Specific methods therefor are the same as those in the first embodiment.

If safety verifier 313 determines that program 300 is not safe in one or more of the checks, program 300 is marked as one which is not safe (step B4 in Fig. 6).

If safety verifier 313 determines that program 300 is safe in all of the checks, program 300 is marked as a safe program (step B3 in Fig. 6). Then, executer 312 executes program 300 (step A6 in Fig. 6). The program marked as one which is not safe and the program marked as one which is safe are stored in safe storage 311 with respective marks thereon. The program marked as one which is not safe may be discarded.

A first effect of the present invention is to allow the execution of a program of interest without further verifications being needed after its safety is verified only once. This is because the safe storage prevents unauthorized addition of a program and rewriting of a program.

A second effect of the present invention is to allow reduced power consumption of a device. This is because processing of safety verification need be performed only once for one program.

A third effect of the present invention is to allow a significant improvement in performance of a program. This is because complicated processing of safety verification need not be performed again for each execution of a program once it has been verified, since the storage ensures the safety of such a program.

A fourth effect of the present invention is to reduce the memory capacity required for a device. This is because verification and execution separately performed in accordance with the method of the present invention require only a larger one of the memory capacity required for verification and the memory capacity required for execution, while verification at the time of execution requires the sum of the memory capacity required for execution and the memory capacity required for execution and the memory capacity required for verification.

It is to be understood, however, that although the characteristics and advantages of the present invention have been set forth in the foregoing description, the disclosure is illustrative only, and changes may be made in the arrangement of the parts within the scope of the appended claims.

Each feature disclosed in this specification (which term includes the claims) and/or shown in the drawings may be incorporated in the invention independently of other disclosed and/or illustrated features.

The text of the abstract filed herewith is repeated here as part of the specification.

A system is provided for verifying the safety of a program down-loaded to a device only once, the safety of the software thereafter being thereby ensured. The system includes a safe storage for storing only a program for which safety has been ensured by a safety verifier, and for ensuring that the program cannot be stored by another means or rewritten. An executer reads the program from the safe storage for execution.

## Claims

1. A system for verifying and ensuring safety of software, comprising:
safety-verifying means for verifying safety of a program; and,
safe-storage means for storing for execution only a program for which safety is verified by said safety-verifying means, and for preventing such stored program from being rewritten or for preventing storing for execution of a program not so verified.

2. A system for verifying and ensuring safety of software as in claim 1, wherein the safety-verifying means marks with a mark a program whose safety has been so verified, and wherein the safe-storage means prevents such mark being rewritten or prevents such a mark being applied to a program whose safety has not been verified.

3. A method of verifying and ensuring safety of software, comprising the steps of:
storing for execution a program verified as safe in a safe storage; and,
preventing the program from being rewritten, or preventing an unverified program being stored for execution in the safe storage.

4. A method as in claim 3, wherein the step of storing the program in the safe storage involves the steps of determining whether safety of the program has been verified, and storing only a program whose safety has been so verified.

5. A method as in claim 3, wherein the step of storing the program in the safe storage involves the steps of storing the program in the safe storage before verifying its safety, and subsequently marking the program as a safe program if its safety is verified and thereafter storing the program for execution.
